# EUROPEAN PATENT APPLICATION

(11) **EP 2 233 527 A1**
(43) Date of publication of application: **29.09.2010**
(21) Application number: 08868840.3
(22) Date of filing: 10.12.2008
(51) Int. Cl.: C08L 23/12, B29C 55/02, C08J 5/18, C08L 67/04, C08L 101/06, B29K 23/00, B29L 7/00

(54) **POLYPROPYLENE RESIN COMPOSITION, MOLDED ARTICLE PRODUCED FROM THE RESIN COMPOSITION, AND METHOD FOR PRODUCTION OF THE MOLDED ARTICLE**

(30) Priority: 27.12.2007 JP 2007337301
(71) Applicant: Kureha Corporation, Chuo-ku Tokyo 103-8552 (JP)
(72) Inventor: SATO, Hiroyuki, Tokyo 103-8552 (JP); YAMANE, Kazuyuki, Tokyo 103-8552 (JP); HOKARI, Yuki, Nagoya-shi Aichi 455-0004 (JP); KURUHARA, Nanako, Tokyo 103-8552 (JP); NOGUCHI, Takaya, Tokyo 103-8552 (JP)
(74) Representative: Albrecht, Thomas
(86) International application number: PCT/JP2008/072405
(87) International publication number: WO 2009/084391

(57) **Abstract**

A polypropylene resin composition containing a resin component composed of 55 to 99% by mass of polypropylene and 1 to 45% by mass of polyglycolic acid, and a reactive compatibilizing agent in a proportion of 0.3 to 30 parts by mass per 100 parts by mass of the resin component; a formed product composed of the polypropylene resin composition, wherein a dispersed phase of the polyglycolic acid residing in the morphology that the polyglycolic acid is dispersed as individually independent thin films exists in a matrix of the polypropylene; and a production process of the formed product.

## Description

### TECHNICAL FIELD

The present invention relates to a polypropylene resin composition, and more particularly to a polypropylene resin composition, from which a formed product excellent in gas barrier properties can be produced.

The present invention also relates to a formed product composed of the polypropylene resin composition and excellent in gas barrier properties, and a production process of the formed product.

### BACKGROUND ART

Polypropylene is a general-purpose resin material excellent in heat resistance, transparency, glossiness, moisture resistance, tensile strength, rigidity, water resistance, chemical resistance, surface hardness, etc., and is used in a wide variety of applications as package material films, containers, various parts, etc.

As unoriented polypropylene films, are known a cast polypropylene film (CPP film) obtained by a casting method and an inflation polypropylene film (IPP film) obtained by an inflation method. These unoriented polypropylene films are used in fields of food packaging, fiber packaging, etc.

A biaxially oriented polypropylene film (OPP film) obtained by a tenter method or double bubble tubular method is relatively cheap, heat-resistant and excellent in transparency, glossiness, moisture resistance and cold resistance and is thus used as a surface layer of a composite packaging material for food.

An extruded sheet of polypropylene is molded into containers in the form of a tray, cup, etc. by sheet forming (thermoforming). These sheet-formed products are mainly used as food packaging containers. A blow molded product of polypropylene is used as an instillation container, condiment container or the like.

Polypropylene has such excellent properties as described above. However, formed products thereof, such as films and containers are high in oxygen gas transmission rate and insufficient in gas barrier properties and are thus unstable for use as packaging materials or containers for contents of which long-term storage is desired, and contents easy to be denatured by oxidation.

In order to improve the gas barrier properties of a polypropylene film, some methods have heretofore been adopted. A typical method thereof is a method of vapor-depositing aluminum or metal oxide on one or both surfaces of the polypropylene film. A deposition CPP film obtained by vapor-depositing aluminum or metal oxide on a cast polypropylene film is excellent in gas barrier properties and light barrier properties and is also combined with heat sealability.

An aluminum-deposited OPP film obtained by vapor-depositing aluminum on a biaxially oriented polypropylene film is excellent in gas barrier properties and light barrier properties. A laminated film excellent in gas barrier properties and light barrier properties can also be obtained by a method of laminating an aluminum foil on one surface of a polypropylene film.

However, since polypropylene is a resin material having no polar group, its adhesion property to other material is in sufficient. Since a polypropylene film itself has releasability, it is difficult to raise a vapor deposition rate when aluminum or metal oxide is vapor-deposited thereon. A composite film obtained by forming a gas barrier layer such as a metal deposition film or aluminum foil on a polypropylene film may be lowered in the adhesion property of the gas barrier layer during storage or processing in some cases.

In the metal-deposited or aluminum-laminated polypropylene film, the gas barrier layer is liable to be cracked at a bent or folded portion upon processing into a packaging bag. When the gas barrier layer is cracked, the gas barrier properties of the composite film are lowered. In the composite polypropylene film, the gas barrier layer is liable to be separated or cracked even by drawing upon sheet forming. These composite films are excellent in light barrier properties, but are low in transparency or opaque, so that the films are poor in visual recognizability of contents.

Japanese Patent Application Laid-Open No. 10-329286 (hereinafter referred to as "Patent Literature 1") has proposed a composite polypropylene film with a gas barrier layer composed of a metal deposition film or metal oxide deposition film formed on a polypropylene film, in which a syndiotactic polypropylene layer is arranged on a surface of the polypropylene film on the side of the gas barrier layer, and a protective layer is formed on the gas barrier layer. According to this method, lowering of the adhesion property of the gas barrier layer can be inhibited, but a production process thereof is complicated. This composite polypropylene film cannot be applied to uses of which visual recognizability of contents is required.

As another method of imparting gas barrier properties to a polypropylene film, is known a method of coating a surface of a biaxially oriented polypropylene film (OPP film) with polyvinylidene chloride (PVDC) excellent in gas barrier properties. The PVDC-coated OPP film is excellent in gas barrier property and moisture resistance. However, the PVDC-coated OPP film requires a device for improving the adhesion property of the PVDC coating layer in addition to the necessity of a coating step of PVDC after an OPP film forming step.

Besides the above-described methods, there have been proposed various kinds of multilayer films with a polypropylene film, a gas barrier film and other resin layer(s) multilayered by a lamination method, a coating method, a vapor deposition method and/or the like.

However, it has been an extremely difficult subject to improve polypropylene itself to enhance the gas barrier properties thereof. If the gas barrier properties of the polypropylene itself can be improved, the degree of freedom of shape of formed or molded products from polypropylene is heightened, and choice branches for combination with other materials can also be widened.

In vapor deposition method or lamination method, it is necessary to form an oriented or unoriented film of polypropylene in advance and form a gas barrier layer composed of a metal deposition film, aluminum foil or the like on the surface thereof. It is difficult or substantially impossible that such a method is applied to improvement in gas barrier properties of three-dimensional molded products such as stretch blow molded containers, trays or cups composed of polypropylene. According to the combination method such as lamination of a metal deposition film or aluminum foil, the transparency of polypropylene is impaired, and so such a method cannot be applied to uses of which visual recognizability of contents is required.

As a method for improving the gas barrier properties of polypropylene, it is considered to blend a gas barrier resin. Typical examples of general-purpose gas barrier resins include ethylene-vinyl alcohol copolymers (EVOH), polyvinylidene chloride (PVDC) and polyvinyl alcohol (PVA).

However, since polypropylene is poor in compatibility with other resin materials, a blend of polypropylene with a general-purpose gas barrier resin is insufficient in film forming ability, orienting (stretching) and processing ability and other forming or molding and processing properties, and so it is difficult to obtain a satisfactory film or other formed or molded product from such a blend. Even if a formed or molded product can be obtained from a resin composition of polypropylene and a general-purpose gas barrier resin, such a product involves various problems and fails to sufficiently improve the gas barrier properties thereof.

PVDC is liable to be decomposed when thermal hysteresis is applied thereto upon melt blending. When a compatibilizing agent is used to improve compatibility or miscibility between polypropylene and the general-purposed gas barrier resin, the gas barrier resin is finely dispersed as fine particle or fibrils in a matrix of the polypropylene, so that the gas barrier properties cannot be sufficiently improved. In general, the gas barrier resin such as PVA or EVOH dispersed in a matrix of another resin is markedly lowered in gas barrier properties by its contact with water or moisture.

On the other hand, polyglycolic acid is known as an aliphatic polyester resin excellent in gas barrier properties and heat resistance in particular among biodegradable plastics. U.S. Patent No. 4,565,851 (hereinafter referred to as "Patent Literature 2") and Japanese Patent Application Laid-Open No. 2005-200516 (hereinafter referred to as "Patent Literature 3") have proposed a process for obtaining a resin composition improved in gas barrier properties by blending a polyglycolic acid-containing resin with a polyester resin such as polyethylene terephthalate (PET).

The process proposed in Patent Literatures 2 and 3 is limited to blends between the same kind of polyester resins excellent in compatibility or miscibility. Polyglycolic acid is poor in compatibility with polypropylene. Therefore, even when the polyglycolic acid is blended for the purpose of improving the gas barrier properties of polypropylene, the resultant blend is poor in film forming ability, orienting and processing ability and other forming or molding and processing properties, and so it is extremely difficult to form or mold it into a satisfactory product.

Patent Literature 1: Japanese Patent Application Laid-Open No. 10-329286
Patent Literature 2: U.S. Patent No. 4,565,851
Patent Literature 3: Japanese Patent Application Laid-Open No. 2005-200516

### DISCLOSURE OF THE INVENTION

### TECHNICAL PROBLEM

It is an object of the present invention to provide a polypropylene resin composition excellent in gas barrier properties. Another object of the present invention is to provide a formed product such as an oriented film formed from the polypropylene resin composition excellent in gas barrier properties, and a production process thereof.

The present inventors have carried out an extensive investigation with a view toward achieving the above objects. As a result, the inventors have reached a polypropylene resin composition obtained by blending the polyglycolic acid and a reactive compatibilizing agent with polypropylene. A formed product formed from the polypropylene resin composition according to the present invention is such that a dispersed phase of the polyglycolic acid exists in a matrix of the polypropylene. It has been found that this dispersed phase resides in the morphology that the polyglycolic acid is dispersed as individually independent thin films, whereby oxygen gas barrier property is markedly improved.

In, for example, a biaxially oriented film composed of the polypropylene resin composition according to the present invention, individually independent plural thin films of the polyglycolic acid exist in a state stacked through a polypropylene layer along a thickness-wise direction of the oriented film.

It is inferred that the dispersed phase of the polyglycolic acid residing in such particular morphology as described above exists in a matrix of the polypropylene, whereby an effect to improve gas barrier properties on the formed product composed of the polypropylene resin composition by the dispersed phase of the polyglycolic acid becomes marked. The present invention has been led to completion on the basis of these findings.

### SOLUTION TO PROBLEM

According to the present invention, there is thus provided a polypropylene resin composition comprising a resin component containing 55 to 99% by mass of polypropylene and 1 to 45% by mass of polyglycolic acid, and a reactive compatibilizing agent in a proportion of 0.3 to 30 parts by mass per 100 parts by mass of the resin component.

According to the present invention, there is also provided a formed product composed of a polypropylene resin composition comprising a resin component containing 55 to 99% by mass of polypropylene and 1 to 45% by mass of polyglycolic acid, and a reactive compatibilizing agent in a proportion of 0.3 to 30 parts by mass per 100 parts by mass of the resin component, wherein a dispersed phase of the polyglycolic acid residing in the morphology that the polyglycolic acid is dispersed as individually independent thin films exists in a matrix of the polypropylene.

According to the present invention, there is further provided a production process of a formed product, comprising respective steps composed of (1) a feeding step 1 of feeding a resin component composed of 55 to 99% by mass of polypropylene and 1 to 45% by mass of polyglycolic acid, and a reactive compatibilizing agent in a proportion of 0.3 to 30 parts by mass per 100 parts by mass of the resin component into an extruder; (2) a sheet-forming step 2 of melting and kneading the respective components in the extruder, extruding the resultant melted and kneaded product into a sheet from a T-die arranged at the tip of the extruder, and cooling and solidifying the extrudate; and (3) an orienting step 3 of heating the sheet to an orienting temperature and then uniaxially or biaxially orienting the sheet, wherein an oriented film, in which a dispersed phase of the polyglycolic acid residing in the morphology that the polyglycolic acid is dispersed as individually independent thin films exists in a matrix of the polypropylene, is obtained through these steps.

### ADVANTAGEOUS EFFECTS OF INVENTION

According to the present invention, there can be provided a polypropylene resin composition excellent in gas barrier properties, and a formed product composed of the polypropylene resin composition and excellent in gas barrier properties. The formed product composed of the polypropylene resin composition is excellent in forming or molding and processing ability, high in the degree of freedom of shape of the formed product, can widen choice branches for combination with other materials and can meet requirements for transparent packaging materials without adopting means such as vapor deposition of a metal or metal oxide, coating of a gas barrier resin layer, cladding of a metal foil and/or lamination with a gas barrier resin because gas barrier properties are imparted to the polypropylene itself.

The polypropylene resin composition and formed product according to the present invention can retain various properties, such as heat resistance, transparency, glossiness, moisture resistance, tensile strength, rigidity, water resistance, chemical resistance and surface hardness, naturally possessed by polypropylene at a high level.

### BRIEF DESCRIPTION OF THE DRAWINGS

[FIG. 1] FIG. 1 is a drawing obtained by observing a sectional surface in a thickness-wise direction along an MD of a biaxially oriented film of Example 1 through a scanning electron microscope (30,000 magnifications).
[FIG. 2] FIG. 2 is a drawing obtained by observing a sectional surface in a thickness-wise direction along a TD of the biaxially oriented film of Example 1 through the scanning electron microscope (30,000 magnifications).
[FIG. 3] FIG. 3 typically illustrates a condition of a dispersed phase of polyglycolic acid at a sectional surface in a thickness-wise direction of a biaxially oriented film obtained by observation through the scanning electron microscope (30,000 magnifications).

### DESCRIPTION OF CHARACTERS

- 1: Matrix of polypropylene
- 2: Dispersed phase of polyglycolic acid
- L: Major axis (length) of polyglycolic acid thin film
- W: Minor axis (thickness) of Polyglycolic acid thin film

### BEST MODE FOR CARRYING OUT THE INVENTION

### 1. Polypropylene:

A representative of polypropylene used in the present invention is a propylene homopolymer, a propylene-ethylene copolymer or a propylene-α-olefin copolymer. The propylene copolymers include random copolymer and block copolymers. Examples of the α-olefin include butene, pentene, hexene and octene. In the propylene copolymer, the content of propylene in the copolymer is generally at least 60% by mass, preferably at least 70% by mass, more preferably at least 80% by mass, particularly preferably at least 90% by mass. As the polypropylene, these homopolymer and copolymers may be used either singly or in combination of 2 or more polymers thereof.

The polypropylene can be produced by a method that a catalyst such as a Ziegler-Natta catalyst, a supported catalyst with a Ziegler-Natta catalyst supported on a carrier, a metallocene catalyst or a constrained-geometry catalyst is used to conduct (co)polymerization of a monomer component(s). Examples of a polymerization process include a slurry polymerization process, a bulk polymerization process and a vapor-phase polymerization process. Examples of a polymerization system include a batch polymerization system and a continuous polymerization system.

Polypropylene can be classified into atactic polypropylene, isotactic polypropylene and syndiotactic polypropylene. Among these, isotactic polypropylene is preferred from the viewpoints of easy availability and physical properties.

The melting point of the propylene homopolymer is of the order of 160 to 165°C. The melting point of the propylene random copolymer is of the order of 135 to 150°C. The melting point of the propylene block copolymer is of the order of 160 to 165°C. Polypropylene having a desired melting point may be used according to performance requirements such as use and heat resistance of a formed product. The melting point can be measured as an endothermic peak of a crystal melting curve determined at a heating rate of 20°C/min by means of a differential scanning calorimeter (DSC). The melting point of polypropylene is preferably at least 135°C from the viewpoint of heat resistance.

The melt mass-flow rate (MFR) of polypropylene is generally 0.01 to 40 g/10 min, preferably 0.5 to 40 g/10 min, more preferably 1 to 30 g/10 min as measured at a temperature of 23°C and a load of 21.18 N according to JIS K 7210.

The melt viscosity of polypropylene used in the present invention is preferably 150 to 900 Pa·s, more preferably 200 to 800 Pa·s, particularly preferably 250 to 700 Pa·s as measured at a temperature of 240°C and a shear rate of 122 sec⁻¹.

Polypropylene may contain various kinds of additives such as a filler, a heat stabilizer, a light stabilizer, a waterproofing agent, a water repellant, a lubricant, a parting agent, a coupling agent, a pigment and a dye if desired. These various additives are used in their effective amounts as necessary for the end application intended.

### 2. Polyglycolic acid:

The polyglycolic acid used in the present invention is a homopolymer or copolymer containing a repeating unit represented by the following formula (1).

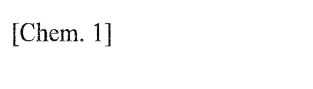

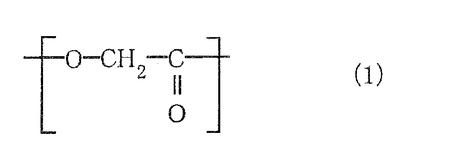

The content of the repeating unit represented by the formula (1) in the polyglycolic acid is generally at least 55% by mass, preferably at least 60% by mass, more preferably at least 70% by mass, particularly preferably at least 80% by mass, often at least 90% by mass, and the upper limit thereof is 100% by mass. If the content of the repeating unit represented by the formula (1) is too low, the properties inherent in the polyglycolic acid, such as gas barrier properties, heat resistance and crystallinity, tend to be deteriorated.

The polyglycolic acid according to the present invention is a crystalline polymer having a melting point. Such a polyglycolic acid can be produced by a process of polycondensing glycolic acid, a glycolic acid alkyl ester or a glycolic acid salt; or a process of subjecting glycolide to ring-opening polymerization. According to the process of subjecting glycolide to ring-opening polymerization, a polyglycolic acid (polyglycolide) high in melt viscosity, little in the amounts of a terminal hydroxyl group and a terminal carboxyl group remaining therein and little in the amount of gasses generated upon its melt processing is easy to be obtained. It is hence preferred to use this process.

The ring-opening polymerization of glycolide is preferably conducted in the presence of a small amount of a catalyst. No particular limitation is imposed on the catalyst. However, as examples thereof, may be mentioned tin compounds such as tin halides (for example, tin dichloride and tin tetrachloride) and tin organic carboxylates (for example, tin octanoate and tin octylate); titanium compounds such as alkoxytitanates; aluminum compounds such as alkoxyaluminum; zirconium compounds such as zirconium acetylacetone; and antimony compounds such as antimony halides and antimony oxide. A homopolymer (i.e., polyglycolide) of polyglycolic acid can be obtained by subjecting glycolide to ring-opening polymerization by itself.

In order to produce a copolymer of glycolic acid as the polyglycolic acid, a process of copolymerizing a monomer such as glycolide or glycolic acid with various kinds of comonomers is adopted. As examples of the comonomers, may be mentioned cyclic monomers such as ethylene oxalate (i.e., 1,4-dioxane-2,3-dione), lactide, lactones (for example, β-propiolactone, β-butyrolactone, pivalolactone, γ-butyrolactone, δ-valerolactone, β-methyl-δ-valerolactone and ε-caprolactone), trimethylene carbonate, 1,3-dioxane, 1,4-dioxane-2-one (i.e., p-dioxanone) and 5,5-dimethyl-1,3-dioxane-2-one; hydroxycarboxylic acids such as lactic acid, 3-hydroxypropanoic acid, 3-hydroxybutanoic acid, 4-hydroxybutanoic acid and 6-hydroxycaproic acid, and alkyl esters thereof; substantially equimolar mixtures of an aliphatic diol such as ethylene glycol or 1,4-butanediol and an aliphatic dicarboxylic acid such as succinic acid or adipic acid or an alkyl ester thereof; and two or more compounds thereof.

Among these comonomers, the cyclic monomers such as lactide, ε-caprolactone, trimethylene carbonate, p-dioxanone and 5,5-dimethyl-1,3-dioxane-2-one; and the hydroxycarboxylic acids such as lactic acid are preferred in that they are easy to be copolymerized and easy to provide a copolymer excellent in physical properties.

The comonomer is used in a proportion of generally at most 45% by mass, preferably at most 30% by mass, more preferably at most 20% by mass, often at most 10% by mass based on all monomers charged. If the proportion of the comonomer is high, the crystallinity of a polymer formed is liable to be impaired. If the crystallinity of polyglycolic acid is impaired, its gas barrier properties, heat resistance, etc. are deteriorated.

A polymerizer for the polyglycolic acid may be suitably selected from among various kinds of apparatus such as extruder type, vertical type having a paddle blade, vertical type having a helical ribbon blade, horizontal type such as an extruder type or kneader type, ampoule type, tube type, and flat plate type (such as quadrangle, especially, rectangle).

The polymerization temperature can be preset within a range of from 120°C, which is a substantial polymerization-initiating temperature, to 300°C according to the purpose. The polymerization temperature is preferably 130 to 250°C, more preferably 140 to 220°C, particularly preferably 150 to 200°C. If the polymerization temperature is too high, a polymer formed tends to undergo thermal decomposition.

The polymerization time is within a range of from 2 minutes to 50 hours, preferably from 3 minutes to 30 hours, more preferably from 5 minutes to 18 hours. If the polymerization time is too short, it is hard to sufficiently advance the polymerization. If the time is too long, a polymer formed tends to be colored.

The melt viscosity of the polyglycolic acid used in the present invention is generally at least 50 Pa·s, preferably at least 100 Pa·s, more preferably at least 200 Pa·s, particularly preferably at least 300 Pa·s or 500 Pa·s as measured at a temperature (Tm+20°C) higher by 20°C than the melting point Tm of the polyglycolic acid and a shear rate of 122 sec⁻¹. The upper limit of the melt viscosity of the polyglycolic acid is generally 20,000 Pa·s, preferably 10,000 Pa·s, more preferably 8,000 Pa·s as measured under the above-described conditions. In many cases, a polyglycolic acid having a melt viscosity of 500 to 4,000 Pa·s may be preferably used.

The polyglycolic acid may contain various kinds of additives such as a filler, a heat stabilizer, a light stabilizer, a waterproofing agent, a water repellant, a lubricant, a parting agent, a coupling agent, a pigment and a dye if desired. These various additives are used in their effective amounts as necessary for the end application intended.

A compound capable of developing a heat stabilizing effect may preferably be added as a heat stabilizer to the polyglycolic acid. The polyglycolic acid is generally insufficient in melt stability and tends to easily generate a gas component upon its melt processing, and such a tendency becomes great as the melt viscosity thereof becomes low in particular. Many of additives generally used in a technical field of polymers, such as a catalyst deactivator, a nucleating agent, a plasticizer, an antioxidant and a heat stabilizer, deteriorate the melt stability of the polyglycolic acid. Accordingly, in order to improve the melt stability of the polyglycolic acid, it is necessary to select a compound functioning as a heat stabilizer.

Such a heat stabilizer can be selected from among compounds conventionally known as antioxidants or heat stabilizers for polymers, and may also be selected from among heavy metal deactivators, catalyst deactivators, nucleating agents, etc. which have not been used as heat stabilizers for polymers. As heat stabilizers, are preferred heavy metal deactivators, phosphates having a pentaerythritol skeleton structure, phosphorus compounds having at least one hydroxyl group and at least one long-chain alkyl ester group, metal carbonates, etc. The metal carbonates include calcium carbonate and strontium carbonate.

Many of phosphorus compounds such as phosphite antioxidants rather exhibit an effect to inhibit the melt stability of the polyglycolic acid. On the other hand, phosphates having a pentaerythritol skeleton structure represented by the following formula (2):

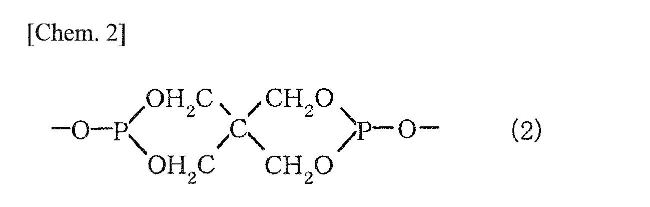

exhibit an effect to specifically improve the melt stability of the polyglycolic acid.

Specific examples of such phosphates having the pentaerythritol skeleton structure include cyclic neopentanetetraylbis(2,6-di-tert-butyl-4-methylphenyl)-phosphite represented by the formula (3):

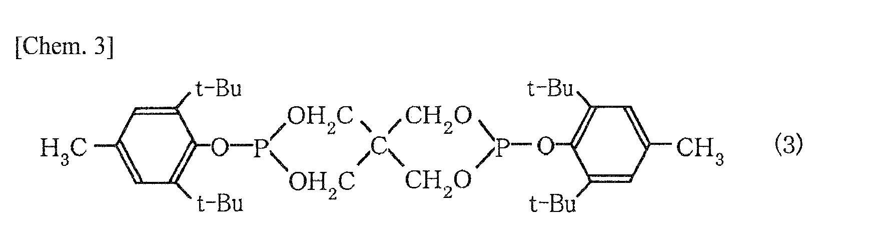

cyclic neopentanetetraylbis(2,4-di-tert-butylphenyl)phosphite represented by the formula (4):

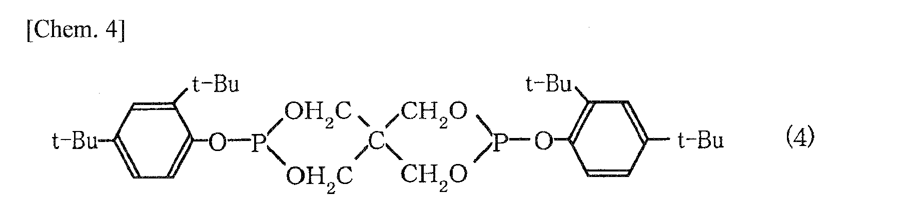

a phosphite antioxidant represented by the formula (5):

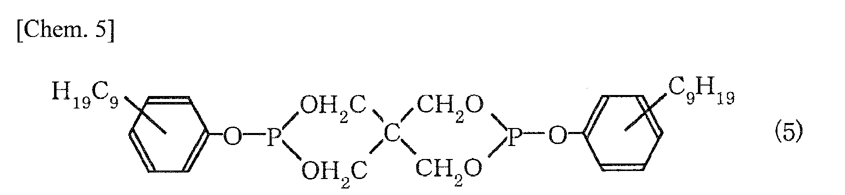

and cyclic neopentanetetraylbis(octadecyl)phosphite represented by the formula (6):

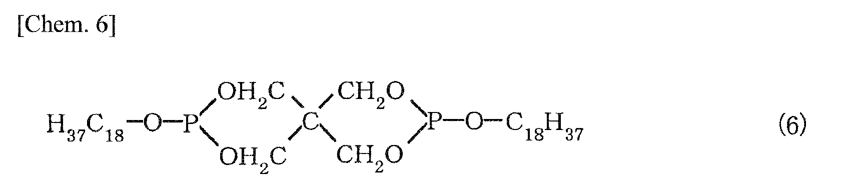

Among the phosphorus compounds, are preferred phosphorus compounds having at least one hydroxyl group and at least one long-chain alkyl ester group represented by the formula (7):

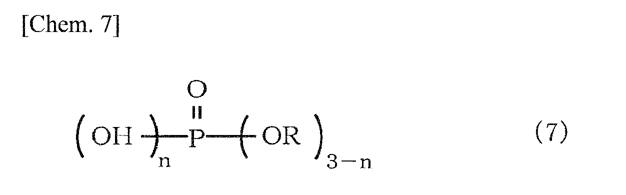

The number of carbon atoms in the long-chain alkyl is preferably within a range of 8 to 24. Specific examples of such phosphorus compounds include mono- or di-stearyl acid phosphate represented by the formula (8):

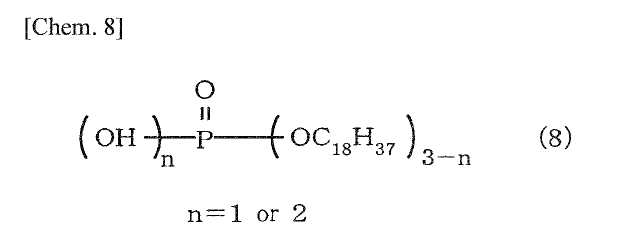

Example of the heavy metal deactivators include 2-hydroxy-N-1H-1,2,4-triazol-3-yl-benzamide represented by the formula (9):

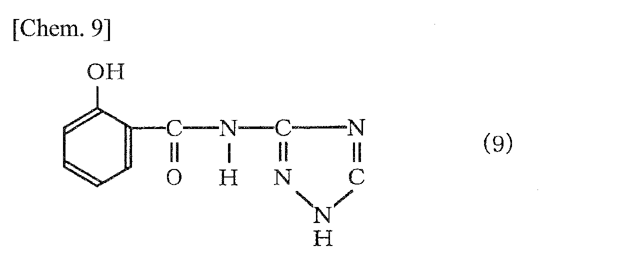

and bis[2-(2-hydroxybenzoyl)hydrazine]dodecanediacid represented by the formula (10):

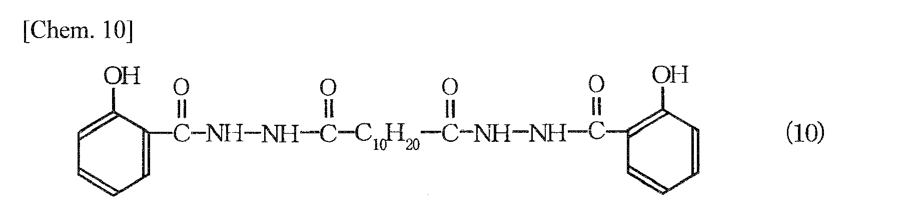

Besides these compounds, phosphorus compounds such as phosphoric acid, trimethyl phosphate, triphenyl phosphate, tetraethylammonium hydroxide diethyl 3,5-di-t-butyl-4-hydroxybenzylphosphate, (IRGANOX 1222, product of CIBA-GEIGY AG), calcium diethylbis[[3,5-bis(1,1-dimethylethyl)-4-hydroxyphenyl]-methyl]phosphate (IRGANOX 1425WL, product of CIBA-GEIGY AG) and tris(2,4-di-t-butylphenyl)phosphite (IRGANOX 168, product of CIBA-GEIGY AG); and tetrakis[methylene-3(3,5'-di-t-butyl-4'-hydroxyphenyl) propionate methane] (IRGANOX 1010, product of CIBA- GEIGY AG) are mentioned.

These heat stabilizers may be used either singly or in combination of 2 or more compounds thereof. A proportion of these heat stabilizers incorporated is generally 0.001 to 5 parts by mass, preferably 0.003 to 3 parts by mass, more preferably 0.005 to 1 part by mass per 100 parts by weight of the polyglycolic acid.

A carbodiimide compound, oxazoline compound or the like may be added as a water resistance improver for the polyglycolic acid. When the water resistance improver is used, the improver is preferably added in a proportion of at most 3% by mass based on the polyglycolic acid.

### 3. Reactive compatibilizing agent:

In the present invention, a reactive compatibilizing agent is used upon blending of the polypropylene and the polyglycolic acid, thereby preparing a resin composition capable of providing a formed product markedly improved in gas barrier properties. The reactive compatibilizing agent is a polymer having a reactive group such as an acid anhydride group, carboxyl group or epoxy group and is known as a compatibilizing agent in a technical field of polymer blends.

It is difficult to completely compatibilize different kinds of polymers at a molecular level. However, a substantially uniform polymer alloy may be formed so far as these polymers have some compatibility. When compatibility between different kinds of polymers is extremely poor, a uniform polymer alloy cannot be formed even when these polymers are blended. In a combination of polymers too poor in compatibility, they may not be blended in some cases even when they are melted and kneaded. Various methods have been proposed in order to improve compatibility between 2 or more polymers, and a typical method thereof is a method of using a compatibilizing agent.

Various kinds of random copolymers, block copolymers and graft copolymers have been developed as compatibilizing agents for plastics. These compatibilizing agents generally have an action that a polymer forming a dispersed phase is dispersed in the form of fine particles in another polymer forming a matrix to form a macroscopically uniform polymer alloy.

A certain compatibilizing agent is added upon blending of polypropylene with a general-purpose gas barrier resin, whereby the gas barrier resin can be finely dispersed in the form of fine particle or fibrils in the polypropylene. However, when a dispersed phase residing in the morphology that the gas barrier resin is finely dispersed in the form of fine particle or fibrils in a matrix of the polypropylene is formed, oxygen gas easily penetrates the matrix of the polypropylene, so that a polymer alloy excellent in gas barrier properties cannot be obtained.

The polypropylene is a polymer having no polar group and is generally poor in compatibility with another kind of polymer. The polyglycolic acid is an aliphatic polyester and has an ester linkage in its molecular chain and a carboxyl group and/or a hydroxyl group at a terminal of the molecular chain. No proposal for a polymer blend of the polypropylene and the polyglycolic acid has heretofore been made.

On the other hand, it has been considered that even if compatibility between the polypropylene and the polyglycolic acid is improved by using the compatibilizing agent, sufficient compatibility cannot be achieved, or the polyglycolic acid is finely dispersed in the morphology of fine particles even if the compatibility can be sufficiently improved.

The present inventors have found that the reactive compatibilizing agent is used upon blending of the polypropylene and the polyglycolic acid, whereby moderate compatibility can be afforded between both polymers, and moreover a formed product, in which the polyglycolic acid exists in a matrix of the polypropylene as a dispersed phase residing in the morphology that the polyglycolic acid is dispersed as individually independent thin films, is obtained after melt forming.

Since the thin films of the polyglycolic acid making up the dispersed phase are formed in layers in a thickness-wise direction of the formed product, the formed product can be provided as a formed product markedly improved in gas barrier properties. It is inferred that the thin films of the polyglycolic acid are formed by receiving various shearing force, stretching force, tensile force, etc. during the preparation of the polypropylene resin composition comprising the polypropylene, polyglycolic acid and reactive compatibilizing agent or during forming and processing.

The reactive compatibilizing agent used in the present invention is a random copolymer, block copolymer or graft copolymer having a reactive group, such as an acid anhydride group (acid anhydride ring), carboxyl group, epoxy group (epoxy ring), hydroxyl group or amino group, in its molecular chain or a side chain thereof. Among these, a reactive compatibilizing agent having at least one reactive group selected from the group consisting of the acid anhydride group, carboxyl group and epoxy group is preferred.

Specific examples of the reactive compatibilizing agent include maleic anhydride-grafted polyolefin type polymers such as maleic anhydride-grafted polypropylene (PP-g-MAH), maleic anhydride-grafted ethylene/propylene rubber (EPR-g-MAH) and maleic anhydride-grafted ethylene/propylene/diene rubber (EPDM-g-MAH); maleic anhydride-grafted polystyrene type polymers such as maleic anhydride-grafted polystyrene (PS-g-MAH), maleic anhydride-grafted styrene/butadiene/styrene copolymers (SBS-g-MAH) and maleic anhydride-grafted styrene/ethylene/butene/styrene copolymers (SEBS-g-MAH); vinyl monomer/maleic anhydride copolymers such as styrene/maleic anhydride copolymers, styrene/acrylic acid/maleic anhydride copolymers and acrylic ester/maleic anhydride copolymers; epoxy group-containing polyolefin type polymers such as ethylene/glycidyl methacrylate copolymers, ethylene/glycidyl methacrylate/vinyl acetate copolymers, ethylene/glycidyl methacrylate/methyl acrylate copolymers, ethylene/glycidyl methacrylate/ethyl acrylate copolymers, copolymers (EGMA-g-PS) with polystyrene grafted on ethylene/glycidyl methacrylate copolymers, copolymers (EGMA-g-PMMA) with polymethyl methacrylate grafted on ethylene/glycidyl methacrylate copolymers and copolymers (EGMA-g-PAS) with styrene/acrylonitrile grafted on ethylene/glycidyl methacrylate copolymers; epoxy group-containing vinyl type random, graft or block copolymers such as glycidyl methacrylate-grafted polystyrene (PS-g-GMA), glycidyl methacrylate-grafted polymethyl methacrylate (PMMA-g-GMA) and glycidyl methacrylate-grafted polyacrylonitrile (PAN-g-GMA); and carboxyl group-containing olefin type random or graft copolymers such as carboxylated polyethylene, carboxylated polypropylene, ethylene/methacrylic acid copolymers (ionomers), styrene/methacrylic acid copolymers and styrene/acrylic acid copolymers. However, the reactive compatibilizing agents are not limited thereto.

The content of a monomer component having a reactive group in the reactive compatibilizing agent is generally 1 to 30% by mass, preferably 2 to 25% by mass, often of the order of 3 to 20% by mass.

Among these reactive compatibilizing agents, polymers having at least one reactive group selected from the group consisting of the acid anhydride group, carboxyl group and epoxy group are preferred, and maleic anhydride-grafted polyolefin type polymers such as maleic anhydride-grafted polypropylene; and epoxy group-containing polyolefin type polymers such as glycidyl methacrylate/methyl acrylate copolymers and ethylene/glycidyl methacrylate/ methyl acrylate copolymers are particularly preferred.

The reactive compatibilizing agents may be used either singly or in combination of 2 or more polymers thereof. The reactive compatibilizing agent may contain other minor components such as a pressure-sensitive adhesive. According to these reactive compatibilizing agents, the polyolefin skeleton thereof has compatibility with the polypropylene, and the reactive group reacts with the polyglycolic acid at an interface between the polypropylene and the polyglycolic acid, whereby moderate compatibility can be imparted.

Examples of commercially available reactive compatibilizing agents usable in the present invention include BOND-FAST (product of Sumitomo Chemical Co., Ltd.; main component: "ethylene/glycidyl methacrylate/methyl acrylate copolymer") and MODIC (product of Mitsubishi Chemical Corporation; main component: "maleic anhydride-grafted polypropylene").

### 4. Polypropylene resin composition:

The polypropylene resin composition according to the present invention comprises a resin component containing 55 to 99% by mass of polypropylene and 1 to 45% by mass of polyglycolic acid, and a reactive compatibilizing agent in a proportion of 0.3 to 30 parts by mass per 100 parts by mass of the resin component. In other words, the polypropylene resin composition according to the present invention comprises 55 to 99 parts by mass of polypropylene, 1 to 45 parts by mass of polyglycolic acid and the reactive compatibilizing agent in a proportion of 0.3 to 30 parts by mass per 100 parts by mass of the resin component containing the polypropylene and polyglycolic acid. The total amount of the polypropylene and polyglycolic acid is 100 parts by mass.

The proportion of the polypropylene in the resin component is preferably 60 to 95% by mass, more preferably 65 to 90% by mass, particularly preferably 70 to 85% by mass. Correspondingly, the proportion of the polyglycolic acid in the resin component is preferably 5 to 40% by mass, more preferably 10 to 35% by mass, particularly preferably 15 to 30% by mass.

If the proportion of the polypropylene is too low, the properties inherent in the polypropylene, such as heat resistance, transparency, glossiness, moisture resistance, tensile strength, rigidity, water resistance, chemical resistance and surface hardness, are impaired, and it is hard to form a matrix of the polypropylene. If the proportion of the polypropylene is too high, the gas barrier property-improving effect by the polyglycolic acid becomes insufficient because the proportion of the polyglycolic acid is too low.

The proportion of the reactive compatibilizing agent is preferably 1 to 25 parts by mass, more preferably 2 to 20 parts by mass, particularly preferably 3 to 15 parts by mass per 100 parts by mass of the resin component. If the proportion of the reactive compatibilizing agent is too low, the polypropylene and the polyglycolic acid are hard to be compatibilized, and so their miscibility becomes poor. If the proportion of the reactive compatibilizing agent is too high, the various properties inherent in the polypropylene are impaired, or the resulting resin composition is liable to have insufficient gas barrier properties.

The polypropylene resin composition according to the present invention may contain various kinds of additives such as a filler, a heat stabilizer, a light stabilizer, a waterproofing agent, a water repellant, a lubricant, a parting agent, a coupling agent, a pigment and a dye as needed. These additive components may be added upon the production of the polypropylene resin composition, or may be added in advance to the polyolefin and/or the polyglycolic acid.

As a process for preparing the polypropylene resin composition according to the present invention, is mentioned a process of using a melting and kneading machine such as an extruder, Plastomill or kneader to melt and knead the respective components. For example, there is a process, in which the respective components are fed to an extruder to melt and knead them, the kneaded product is melt-extruded into strand, and the strand is cooled and cut into pellets.

As another process, is mentioned a process, in which the respective components of the polypropylene, polyglycolic acid and reactive compatibilizing agent are poured into an extruder from a hopper and melted and kneaded in the extruder and then melt-extruded into a desired shape. In this case, the polypropylene resin composition can be obtained as a formed product of a desired shape or an intermediate formed product.

### 5. Formed product and production process thereof:

The formed product according to the present invention is obtained by forming the polypropylene resin composition comprising the polypropylene, polyglycolic acid and reactive compatibilizing agent and is a formed product in which a dispersed phase of the polyglycolic acid residing in the morphology that the polyglycolic acid is dispersed as individually independent thin films exists in a matrix of the polypropylene.

In order to disperse the polyglycolic acid in the morphology of thin films in the matrix of the polypropylene, it is preferable that the reactive compatibilizing agent is added to melt and knead it, and moreover stretching force, tensile force and/or the like is applied to a formed product or an intermediate formed product upon forming, and it is more preferable to conduct orienting. When the process, in which the respective components of the polypropylene, polyglycolic acid and reactive compatibilizing agent are poured into the extruder from the hopper and melted and kneaded in the extruder and then melt-extruded into a desired shape, is adopted, the thin-film morphology of the polyglycolic acid can be formed still more easily compared with the process of using the pellets preformed from these components.

The results of researches by the present inventors have revealed that when the melting and kneading time (residence time in the extruder) of the respective components in the extruder is lengthened, the oxygen gas barrier property of an oriented film finally obtained is improved. The residence time in the extruder varies according to the shape and size of the extruder, but is generally 3 to 30 minutes. The residence time in the extruder is preferably 5 to 25 minutes, more preferably 6 to 20 minutes from the viewpoint of more improving the gas barrier properties of the resulting oriented film. If the residence time of the respective components in the extruder is too short, it is difficult to achieve an effect to more improve the oxygen gas barrier property. If the residence time is too long, unfavorable phenomena such as thermal decomposition of the polyglycolic acid are liable to occur.

The melting and kneading in the extruder may be conducted by installments according to the length of the residence time of the respective components in the extruder and the kind of the extruder so as to give a desired residence time. Specifically, a process, in which the first melting and kneading is conducted in the extruder, the molten resin extruded is pelletized, and the resultant pellets are then fed to the extruder again to conduct the second melting and kneading, may also be adopted. The melting and kneading in the extruder is performed by installments, whereby the total residence time can be lengthened.

Upon the melt extrusion of the polypropylene resin composition into a sheet, the sheet is easy to undergo orienting by a difference in speed between rolls. When the sheet is sheet-formed (thermoformed) into a formed product such as a tray or cup, the orientation of the polyglycolic acid is easy to occur due to drawing by a mold. When the polypropylene resin composition is subjected to blow molding, the polypropylene resin is easy to undergo stretching and orientation upon blowing within a mold. The dispersed phase of thin-film morphology of the polyglycolic acid is formed by such stretching force and tensile force in addition to shearing force upon the melting and kneading.

Even when formed into a sheet, the polypropylene resin composition according to the present invention resides in the morphology that the polyglycolic acid in the sheet is dispersed as individually independent plural thin films in a state stacked through a polypropylene layer. Such dispersed morphology of the polyglycolic acid is considered to be attributable to the fact that the sheet is easy to undergo orienting by a difference in speed between rolls. In fact, the morphology that the polyglycolic acid is dispersed as individually independent thin films can be more clearly observed at a section along MD of this sheet.

The thin-film morphology of the polyglycolic acid is preferably controlled by more positively orienting the polypropylene resin composition. Typical examples of an orienting (stretching) process for the polypropylene resin composition include a production process of a uniaxially oriented or biaxially oriented film from an unoriented film and a stretch blow molding process.

The polypropylene, polyglycolic acid, reactive compatibilizing agent and optionally various kinds of additives are melted and kneaded at a temperature of from the melting point Tm of the polyglycolic acid or higher to 300°C or lower. The melting and kneading of these respective components is conducted by means of a melting and kneading machine such as a single-screw or twin-screw extruder, Plastomill or kneader. The melting point of polyglycolic acid homopolymer is about 220°C. The melting point of a copolymer of the polyglycolic acid and another comonomer is generally 220°C or lower. However, the melting point is not very lowered when the proportion of the comonomer copolymerized is lessened. Since the melting point of the polypropylene is generally within a range of 135 to 165°C, the polypropylene, polyglycolic acid, reactive compatibilizing agent and optionally various kinds of additives are generally melted and kneaded at a temperature not lower than the melting point Tm of the polyglycolic acid.

Upon the melting and kneading, the polyglycolic acid receives shearing force in the presence of the reactive compatibilizing agent and is dispersed in a matrix of the polypropylene. It is preferable that the kind and proportion of the reactive compatibilizing agent used, the feeding method of the respective components to the melting and kneading machine, the kneading temperature, the kneading time, and the like are controlled in such a manner that the dispersed phase of the polyglycolic acid does not become fine particles or fibrils. A preferable melting and kneading method is a method, in which the respective components are fed to a hopper of an extruder, melted and kneaded in the extruder and then melt-extruded into a desired shape from a slit die. The resultant formed product is oriented to provide a final formed product.

In order to produce a uniaxially or biaxially oriented film, for example, the respective components are poured into a single-screw or twin-screw extruder from a hopper, melted and kneaded at a temperature of from the melting point Tm of the polyglycolic acid to 300°C and melt-extruded into a sheet from a T-die arranged at the tip of the extruder. The molten sheet is quenched on a cooling roll into a solidified sheet. The solidified sheet is heated to control the temperature of the sheet to an orienting temperature of generally 50 to 170°C, preferably 50 to 160°C, and uniaxially or biaxially oriented.

The draw ratio is from higher than one time to at most 20 times, preferably 1.5 to 10 times, more preferably 2 to 8 times in a machine direction (lengthwise direction; MD) and/or a crosswise direction (transversal direction; TD). When a biaxially oriented film is produced, orienting is conducted successively or simultaneously in both directions of machine and crosswise directions. When uniaxial orienting is conducted, an orientation roll is used to conduct orienting. When biaxial orienting is conducted, the orientation roll is used to conduct orienting in MD, and a tenter is used to conduct orienting in TD. The film is preferably provided as a biaxially oriented film from the viewpoint of sufficiently improving the oxygen gas barrier property. The oriented film is preferably heat-set for from 1 second to 3 hours at a temperature ranging from 60 to 170°C, preferably from 70 to 150°C while maintaining its length constant, or under tension.

An inflation process, in which the respective components are melt-extruded into a tube from an extruder equipped with a ring die for inflation, the tube is immediately quenched, the temperature of the tube is then controlled to an orientation temperature (50 to 170°C) to inflate the tube so as to give a blow-up ratio of from higher than one time to at most 10 times (preferably 2 to 8 times), a take-up speed is controlled to 0.5 to 100 m/min (preferably 1 to 50 m/min) to take up the tube through nip rolls while controlling the take-up speed so at to give a draw ratio of from higher than one time to at most 10 times (preferably 2 to 8 times) in MD, and optionally the oriented tube is heat-set for from 1 second to 3 hours at a temperature ranging from 60 to 170°C, preferably from 70 to 150°C while maintaining its length constant, or under tension, may be adopted in place of the above-described T-die process.

In order to produce a blow molded container, a preform of the polypropylene resin composition is formed or molded at a temperature of from the melting point Tm of the polyglycolic acid to 300°C by extrusion or injection molding, and air is simultaneously or successively blown into the preform in a mold to conduct blow molding.

In order to produce a stretch blow molded container, a preform of the polypropylene resin composition is formed or molded at a temperature of from the melting point Tm of the polyglycolic acid to 300°C by extrusion or injection molding, the preform is oriented at a temperature of from 50 to 170°C and a draw ratio of from higher than one time to at most 10 times in a machine direction, air is simultaneously or successively blown into the preform to blow-mold the preform into a hollow container at a blow-up ratio of 1.5 to 10 times, and optionally the hollow container is heat-set for from 1 second to 30 minutes at a temperature ranging from 50 to 170°C, preferably from 60 to 150°C. The preform is formed or molded in the form of a pipe by extrusion or a closed-end parison by injection molding. The stretch blow molding may be conducted by either a hot-parison system or a cold-parison system.

Besides the above-described production processes of the formed products, a press molding process and a sheet forming process may also be adopted. When the formed product is an unoriented sheet or oriented sheet, the surfaces thereof may be subjected to vapor deposition with aluminum or metal oxide, coating with PVDC, lamination with an aluminum foil or lamination with other resin layers.

The formed product according to the present invention preferably resides in the morphology that the polyglycolic acid is dispersed in a matrix of the polypropylene as individually independent thin films, the ratio L/W of a major axis L (length) to a minor axis W (thickness) in each of which is at least 10, when a section thereof is observed through a microscope.

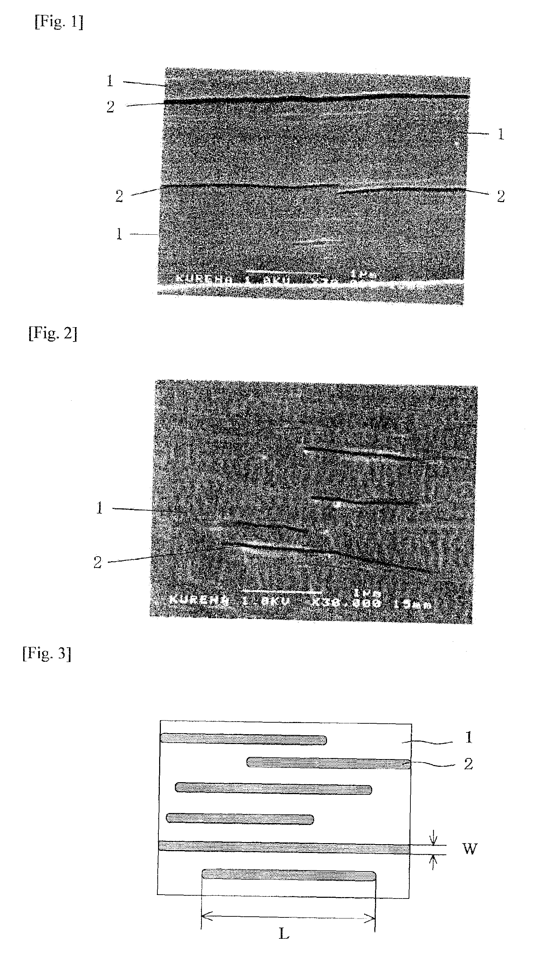

FIG. 1 is a drawing obtained by observing a section (section in a thickness-wise direction of the film) along a machine direction (MD) of a biaxially oriented film obtained in Example 1 through a scanning electron microscope [SEM; JSM 6301F (microscope for measurement of ultra-depth morphology), manufactured by JEOL Ltd.] of 30,000 magnifications. It is understood that a dispersed phase 2 of a thin-film morphology of the polyglycolic acid exists in a matrix 1 of the polypropylene.

FIG. 2 is a drawing obtained by observing a section (section in a thickness-wise direction of the film) along a transverse direction (TD) of the biaxially oriented film obtained in Example 1 through the SEM (30,000 magnifications). It is also understood from FIG. 2 that the dispersed phase 2 of the thin-film morphology of the polyglycolic acid exists in the matrix 1 of the polypropylene like FIG. 1. These drawings based on the SEM photographs illustrate the sections in the thickness-wise direction of the biaxially oriented film. The thickness-wise direction of the biaxially oriented film means a direction having the smallest dimension compared with the respective dimensions in the machine and transverse directions of the biaxially oriented film.

It is understood from FIGS. 1 and 2 that the polyglycolic acid is dispersed in a thinly extended state in both sections in the thickness-wise directions of MD and TD of the biaxially oriented film, and from this fact, the polyglycolic acid is dispersed as thin films in the matrix of the polypropylene. In addition, it is understood from FIGS. 1 and 2 that the dispersed phase of the polyglycolic acid resides in the morphology that the individually independent plural thin films of the polyglycolic acid are dispersed in a state stacked through a polypropylene layer along the thickness-wise direction of the oriented film. The polyglycolic acid takes such dispersed morphology, whereby it can be sufficiently inhibited that oxygen gas permeates the matrix of the polypropylene. As a result, a formed product of the polypropylene resin composition, which is excellent in gas barrier properties, is obtained.

FIG. 3 is a typical drawing illustrating the fact that a dispersed phase 2 of the polyglycolic acid residing in the morphology that the polyglycolic acid is dispersed as individually independent thin films exists in a matrix 1 of the polypropylene. In order to indicate the degree of dispersion in the dispersed phase of the polyglycolic acid, a ratio L/W of a major axis L (length) to a minor axis W (thickness) in the thin film of the polyglycolic acid can be calculated out by using a photograph taken by a microscope.

Specifically, a photograph taken by a scanning electron microscope (microscope for measurement of ultra-depth morphology) and/or a confocal laser microscope is used to calculate out a minor axis W and a major axis L in the thin film of the polyglycolic acid, whereby a ratio L/W can be calculated out from the values thereof. Since the polyglycolic acid is often dispersed as thin films having an extremely long major axis L and an extremely short minor axis W in the matrix of the polypropylene, it is desirable to adopt a method, in which a scanning electron microscope high in magnification is used to measure the minor axis W of the thin film, a confocal laser microscope relatively low in magnification is used to measure the major axis L of the thin film, and the L/W ratio is calculated out on the basis of these measured values.

More specifically, a photograph taken by a scanning electron microscope of 30,000 magnifications is used to measure the minor axis W of the thin film of the polyglycolic acid, a photograph taken by a confocal laser microscope of 1,000 magnifications is used to measure the major axis L of the thin film of the polyglycolic acid, and the L/W ratio is calculated out from these measured values taking the respective magnifications into consideration. When the minor axis W of the thin film of the polyglycolic acid is relatively long, and the major axis L is relatively short, the ratio L/W may also be measured by only any one of the scanning electron microscope and the confocal laser microscope.

In the formed product according to the present invention, the ratio L/W is preferably at least 10, more preferably at least 15, particularly preferably at least 20. The upper limit of the ratio L/W is generally 500,000, preferably 100,000, often about 50,000.

When the formed product according to the present invention is a biaxially oriented film, ratios L/W at a section (section in a thickness-wise direction) in TD thereof and at a section (section in a thickness-wise direction) in MD thereof are each generally 10 to 500,000, preferably 15 to 100,000, particularly preferably 20 to 50,000.

In the formed product according to the present invention, the polyglycolic acid forms a dispersed phase in the morphology of thin films. It is thus understood that when the formed product according to the present invention is an oriented film such as a biaxially oriented film, a dispersed phase of the polyglycolic acid residing in the morphology that the polyglycolic acid is dispersed as individually independent thin films, the ratio L/W of a major axis L to a minor axis W in each of which is at least 10 when not only TD and MD, but any section in a thickness-wise direction of the oriented film is observed through a microscope, exists in a matrix of the polypropylene.

As apparent from FIGS. 1 and 2, in the case where the formed product according to the present invention is an oriented film, the dispersed phase of the polyglycolic acid resides in the morphology that the individually independent plural thin films of the polyglycolic acid are dispersed in a state stacked through a polypropylene layer along a thickness-wise direction of the oriented film. Even when the formed product according to the present invention is of another shape such as a sheet, blow molded container or stretch blow molded container, the individually independent thin films of the polyglycolic acid forms a dispersed phase as a result that such a formed product receives various force such as shearing force upon melting and kneading, and stretching force, tensile force and stress upon forming or molding processing.

When the formed product according to the present invention is an biaxially oriented film, the oxygen gas transmission coefficient thereof when standardized in a thickness of 10 µm is preferably at most 1/2, more preferably at most 2/5 compared with a biaxially oriented film of polypropylene alone. A ratio (ratio to the oxygen transmission coefficient of the biaxially oriented film of polypropylene) of the oxygen gas transmission coefficient of the biaxially oriented film according to the present invention can be reduced to at least 1/10 according to the kind of the reactive compatibilizing agent. The lower limit of this ratio of the oxygen transmission coefficient is generally about 1/100 or 1/70, often about 1/50.

### EXAMPLES

The present invention will hereinafter be described more specifically by the following Examples and Comparative Examples. Measuring methods or evaluating methods of physical properties and other properties are as follows.

### (1) Melt Viscosity:

CAPIROGRAPH 1-C (manufactured by Toyo Seiki Co.) equipped with a capillary (1 mm in diameter x 10 mm in length) was used as a measuring apparatus of a melt viscosity to measure a melt viscosity of polyglycolic acid. More specifically, after about 20 g of a polyglycolic acid sample was introduced into the measuring apparatus heated to a temperature (Tm+20°C) higher by 20°C than the melting point of the sample and held for 5 minutes at this temperature, the melt viscosity thereof was measured at a shear rate of 122 see⁻¹. The melt viscosity of polypropylene was measured at a temperature of 240°C and a shear rate of 122 sec⁻¹.

### (2) Measurement of L/W of dispersed phase of polyglycolic acid:

A sample having a width of about 1 mm was cut out of a film subjected to orienting and heat setting by cutting perpendicularly to a plane by a glass knife. The sample was set in an etching apparatus ("IE-10", manufactured by Eiko Engineering Co., Ltd.), oxygen within a chamber was removed into an argon atmosphere, and the cut surface was then ion-etched under conditions of a voltage of 15 kV, a current of 10 mA and a time of 3 minutes.

The etched surface (section in a thickness-wise direction of the film) of the sample was then observed and photographed through a scanning electron microscope [JSM 6301F, manufactured by JEOL Ltd. (30,000 magnifications, visual field = about 300 µm²)] and a confocal laser microscope [VK-8500, manufactured by Keyence Co. (1,000 magnifications)] to electronically record images.

The recorded images were bicolored by means of an image analysis and processing software (IP-1000, manufactured by Asahi Kasei Corporation) to find a major axis L of thin films of the polyglycolic acid, which formed a dispersed phase, from the photograph taken by the scanning electron microscope and a minor axis W from the photograph taken by the confocal laser microscope, thereby calculating out a ratio L/W based on these values. With respect to the ratio L/W of the respective thin films forming the dispersed phase, the lower limit and upper limit values thereof are shown.

### (3) Oxygen transmission coefficient:

The oxygen transmission rate of a film sample was measured by means of an oxygen transmission rate measuring apparatus OX-TRAN100 (manufactured by Mocon, Inc.) under conditions of a temperature of 23 °C and a relative humidity of 80%. The measured result of the oxygen transmission rate is indicated as an oxygen transmission coefficient standardized in a thickness of 10 µm.

### [Comparative Example 1]

Pellets of polypropylene (PRIME POLYMER F113G, product of Prime Polypro Co., Ltd.; MFR = 3.0 g/10 min; melt viscosity = 522 Pa·s) were fed from a hopper of a twin-screw extruder (LT-20, manufactured by Toyo Seiki Co., Ltd.) equipped with a feeder, melted and kneaded, and melt-extruded into a sheet. With respect to temperature setting of zones of C1 to C3 and a T-die, the temperature of the extruder was set to C1 = 230°C, C2 = 240°C, C3 = 250°C and T-die = 245°C. The residence time of the resin within the extruder was controlled to 3 minutes.

The melt-extruded sheet was brought into contact with a cooling roll to quench it, thereby providing an amorphous sheet having a thickness of 36 µm. The resultant amorphous sheet was heated to 60°C for 1 minute and simultaneously biaxially oriented to 3.5 x 3.5 times by means of a biaxially orienting machine (FILM STRETCHING TESTER XGH-S, manufactured by Toyo Seiki Co., Ltd.). After the orienting, the film was fixed by a metal frame and subjected to a heat treatment for 15 minutes at 100°C to heat-set the film. In this manner, a biaxially oriented film having a thickness of 3 µm was obtained. The results are shown in Table 1.

### [Comparative Example 2]

A biaxially oriented film having a thickness of 3 µm was prepared in the same manner as in Comparative Example 1 except that 20 parts by weight of polyglycolic acid pellets were poured from the hopper of the twin-screw extruder together with 80 parts by mass of the same polypropylene pellets as those used in Comparative Example 1 and melted and kneaded so as to become uniform in a dry state.

The polyglycolic acid pellets are those obtained by adding a heat stabilizer AX-71 (mono- and/or di-stearyl acid phosphate; product of ADEKA CORPORATION) in a proportion of 0.03 parts by mass to 100 parts by mass of a ring-opening polymer of glycolide having a melt viscosity of 785 Pa·s. The results are shown in Table 1.

### [Example 1]

A biaxially oriented film having a thickness of 3 µm was prepared in the same manner as in Comparative Example 2 except that in addition to the 80 parts by weight of the polypropylene pellets and 20 parts of the polyglycolic acid pellets, an ethylene/glycidyl methacrylate/methyl acrylate copolymer (BOND-FAST, product of Sumitomo Chemical Co., Ltd.) was blended in a proportion of 6.5 parts by mass per 100 parts by weight of these resin components.

SEM photographs (magnification = 30,000 times) of sections in the thickness-wise direction of the resultant biaxially oriented film are illustrated in FIGS. 1 and 2. As apparent from FIGS. 1 and 2, it is understood that the polyglycolic acid resides in the morphology dispersed as individually independent plural thin films in a state stacked through a polypropylene layer at a section in the thickness-wise direction along MD of the biaxially oriented film, and a section in the thickness-wise direction along TD. With respect to the melt-extruded sheet before the biaxial orienting, SEM photographs (magnification = 30,000 times) at sections in the thickness-wise direction were also taken. As a result, it was confirmed that the polyglycolic acid is dispersed as individually independent plural thin films at a section along MD thereof in particular. The results are shown in Table 1.

### [Example 2]

A biaxially oriented film having a thickness of 3 µm was prepared in the same manner as in Comparative Example 2 except that in addition to the 80 parts by weight of the polypropylene pellets and 20 parts of the polyglycolic acid pellets, maleic anhydride-grafted polypropylene (MODIC, product of Mitsubishi Chemical Corporation) was blended in a proportion of 10 parts by mass per 100 parts by weight of these resin components.

SEM photographs (magnification = 30,000 times) of sections in the thickness-wise direction of the resultant biaxially oriented film were taken. As a result, it was proved that the polyglycolic acid resides in the morphology dispersed as individually independent plural thin films in a state stacked through a polypropylene layer at a section in the thickness-wise direction along MD, and a section in the thickness-wise direction along TD.

With respect to the melt-extruded sheet before the biaxial orienting, SEM photographs (magnification = 30,000 times) at sections in the thickness-wise direction were also taken. As a result, it was confirmed that the polyglycolic acid is dispersed as individually independent plural thin films at a section along MD thereof in particular. The results are shown in Table 1.

[Table 1]

**Table 1**

| | Comparative Example | | Example | |
|---|---|---|---|---|
| | 1 | 2 | 1 | 2 |
| Resin composition (parts) | | | | |
| Polypropylene | 100 | 80 | 80 | 80 |
| Polyglycolic acid | - | 20 | 20 | 20 |
| Compatibilizing agent | | | | |
| BOND-FAST(*1) | - | - | 6.5 | - |
| MODIC(*2) | - | - | - | 10 |
| Biaxially oriented film | | Impossible of orienting | | |
| Dt3wmtio(MD/TD) | 3.5/3.5 | | 3.5/3.5 | 3.5/3.5 |
| L/W ratio of disposed phase | | | | |
| TD section(lower-upper limit) | None | | 27-340 | 130-1,430 |
| MD saction(lower-upper limit) | None | | 433-790 | 4,000-30,000 |
| Oxygen transmission coefficient (23°C,80%RH)(*3) (cm³·cm/cm²·sec·cmHg) | 5.39x10⁻¹¹ | | 1.99x10⁻¹¹ | 1.59x10⁻¹² |
| Oxygen gas barrier ratio (based on Comp. Ex. 1) | 1 | | 0.37 | 0.03 |

| | | | | |
|---|---|---|---|---|
| (Note) (*1) Ethylene/glycidyl methacrylate/methyl acrylate copolymer (BOND-FAST, product of Sumitomo Chemical Co., Ltd.). (*2) Maleic anhydride-grafted polypropylene (MODIC, product of Mitsubishi Chemical Corporation). (*3) A value found by standardizing the measured result of an oxygen transmission rate in a thickness of 10 µm. | | | | |

### [Consideration]

The biaxially oriented film (Comparative Example 1) of the polypropylene alone is insufficient in oxygen gas barrier property. In the biaxially oriented film (Comparative Example 2) composed of the resin composition of the polypropylene and polyglycolic acid, the amorphous sheet thereof could not be biaxially oriented because the compatibility between both polymers was poor.

On the other hand, when the reactive compatibilizing agent is added (Examples 1 and 2), the compatibility between the polypropylene and polyglycolic acid is improved, a biaxially oriented film can be formed, and the oxygen gas barrier property thereof is markedly improved.

### [Comparative Example 3]

Pellets of polypropylene (PRIME POLYPRO FI13G, product of PRIME POLYMER Co., Ltd.; MFR = 3.0 g/10 min; melt viscosity = 522 Pa·s) were fed from a hopper of a twin-screw extruder (LT-20, manufactured by Toyo Seiki Co., Ltd.) equipped with a feeder, melted and kneaded, and melt-extruded into a sheet. With respect to temperature setting of zones of C1 to C3 and a T-die, the temperature of the extruder was set to C1 = 230°C, C2 = 240°C, C3 = 250°C and T-die = 245°C. The residence time of the resin within the extruder was controlled to 3 minutes.

The melt-extruded sheet was brought into contact with a cooling roll to quench it, thereby providing an amorphous sheet having a thickness of 135 µm. The resultant amorphous sheet was heated to 60°C for 1 minute and simultaneously biaxially oriented to 3.5 x 3.5 times by means of a biaxially orienting machine (FILM STRETCHING TESTER XGH-S, manufactured by Toyo Seiki Co., Ltd.). After the orienting, the film was fixed by a metal frame and subjected to a heat treatment for 15 minutes at 100°C to heat-set the film. In this manner, a biaxially oriented film having a thickness of 11 µm was obtained. The thickness of the biaxially oriented film was about 3.7 times as much as the thickness of the biaxially oriented film of Comparative Example 1. The results are shown in Table 2.

### [Example 3]

A biaxially oriented film having a thickness of 12 µm was prepared in the same manner as in Comparative Example 3 except that 10 parts by mass of maleic anhydride-grafted polypropylene (MODIC, product of Mitsubishi Chemical Corporation) was blended with 100 parts by weight of a resin component composed of 80 parts by weight of the polypropylene pellets and 20 parts of polyglycolic acid pellets.

The polyglycolic acid pellets are those obtained by adding a heat stabilizer AX-71 (mono- and/or di-stcaryl acid phosphate; product of ADEKA CORPORATION) in a proportion of 0.03 parts by mass to 100 parts by mass of a ring-opening polymer of glycolide having a melt viscosity of 785 Pa·s. The results are shown in Table 2.

### [Example 4]

A biaxially oriented film having a thickness of 11 µm was prepared in the same manner as in Example 3 except that the residence time of the kneading component within the extruder upon the preparation of the melt-extruded sheet was changed to 6 minutes from 3 minutes. The results are shown in Table 2.

### [Example 5]

A biaxially oriented film having a thickness of 11 µm was prepared in the same manner as in Example 3 except that the residence time of the kneading component within the extruder upon the preparation of the melt-extruded sheet was changed to 9 minutes from 3 minutes. The results are shown in Table 2.

### [Example 6]

The residence time of the kneading component within the extruder upon the preparation of the melt-extruded sheet was set to 9 minutes to conduct the first melting and kneading, and the kneaded product was pelletized. The pellets were fed to the extruder again, the residence time was set to 3 minutes to conduct the second melting and kneading, and the kneaded product was melt-extruded into a sheet. In this manner, the melting and kneading in the extruder was conducted in the total residence time of 12 minutes. A biaxially oriented film having a thickness of 11 µm was prepared in the same manner as in Example 3 except for this fact. The results are shown in Table 2.

[Table 2]

**Table 2**

| | Comp. Example | Example | | | |
|---|---|---|---|---|---|
| | 3 | 3 | 4 | 5 | 6 |
| Resin composition (parts) | | | | | |
| Polypropylene | 100 | 80 | 80 | 80 | 80 |
| Polyglycolic acid | - | 20 | 20 | 20 | 20 |
| Compatibilizing agent | | | | | |
| MODIC(*1) | - | 10 | 10 | 10 | 10 |
| Residence time in extruder (min) | 3 | 3 | 6 | 9 | 12 1^{st}:9 2^{nd}:3 |
| Biaxially oriented film | | | | | |
| Drawratio(MD/ID) | 3.5/3.5 | 3.5/3.5 | 3.5/3.5 | 3.5/3.5 | 3.5/3.5 |
| Oxygen transmission coefficient (23°C,80%RH)((*2) (cm³·cm/cm²-sec-cmHg) | 9.65x10⁻¹⁰ | 3.00x10⁻¹⁰ | 9.07x10⁻¹¹ | 3.76x10⁻¹¹ | 1.79x10⁻¹¹ |
| Oxygen gas barrier ration (based on Comp. Ex. 3) | 1 | 0311 | 0.094 | 0.039 | 0.019 |

| | | | | | |
|---|---|---|---|---|---|
| (Note) (*1) Maleic anhydride-grafted polypropylene (MODIC, product of Mitsubishi Chemical Corporation). (*2) A value found by standardizing the measured result of an oxygen transmission rate in a thickness of 10 µm. | | | | | |

### [Consideration]

As apparent from the results in Table 2, it is understood that when the residence time within the extruder upon the melting and kneading of the respective components is increased up to 12 minutes from 3 minutes, the oxygen gas barrier property of the resulting biaxially oriented film is markedly improved as the time increases.

### INDUSTRIAL APPLICABILITY

The polypropylene resin composition according to the present invention and the formed products composed of the resin composition can be utilized as, for example, packaging materials for food, medicine, electronic parts, etc.

## Claims

1. A polypropylene resin composition comprising a resin component containing 55 to 99% by mass of polypropylene and 1 to 45% by mass of polyglycolic acid, and a reactive compatibilizing agent in a proportion of 0.3 to 30 parts by mass per 100 parts by mass of the resin component.

2. The polypropylene resin composition according to claim 1, wherein the polypropylene has a melt mass-flow rate (MFR) of 1 to 30 g/10 min as measured at a temperature of 23 °C and a load of 21.18 N according to the provisions of JIS K 7210, and a melt viscosity of 150 to 900 Pa·s as measured at a temperature of 240°C and a shear rate of 122 sec⁻¹.

3. The polypropylene resin composition according to claim 1, wherein the polyglycolic acid has a melt viscosity of 500 to 4,000 Pa·s as measured at a temperature higher by 20°C than the melting point of the polyglycolic acid and a shear rate of 122 sec⁻¹.

4. The polypropylene resin composition according to claim 1, wherein the polyglycolic acid contains at least one heat stabilizer selected from the group consisting of heavy metal deactivators, phosphates having a pentaerythritol skeleton structure, phosphorus compounds having at least one hydroxyl group and at least one long-chain alkyl ester group, and metal carbonates in a proportion of 0.001 to 5 parts by mass per 100 parts by mass of the polyglycolic acid.

5. The polypropylene resin composition according to claim 1, wherein the reactive compatibilizing agent is a polymer having at least one reactive group selected from the group consisting of an acid anhydride group, a carboxyl group and an epoxy group.

6. The polypropylene resin composition according to claim 5, wherein the reactive compatibilizing agent is at least one reactive group-containing polymer selected from the group consisting of maleic anhydride-grafted polyolefin type polymers and epoxy group-containing polyolefin type polymers.

7. The polypropylene resin composition according to claim 5, wherein the reactive compatibilizing agent is at least one reactive group-containing polymer selected from the group consisting of maleic anhydride-grafted polypropylene, glycidyl methacrylate/methyl acrylate copolymers and ethylene/glycidyl methacrylate/methyl acrylate copolymers.

8. A formed product composed of a polypropylene resin composition comprising a resin component containing 55 to 99% by mass of polypropylene and 1 to 45% by mass of polyglycolic acid, and a reactive compatibilizing agent in a proportion of 0.3 to 30 parts by mass per 100 parts by mass of the resin component, wherein a dispersed phase of the polyglycolic acid residing in the morphology that the polyglycolic acid is dispersed as individually independent thin films exists in a matrix of the polypropylene.

9. The formed product according to claim 8, wherein the reactive compatibilizing agent is a polymer having at least one reactive group selected from the group consisting of an acid anhydride group, a carboxyl group and an epoxy group.

10. The formed product according to claim 8, wherein the formed product is an oriented film composed of the polypropylene resin composition.

11. The formed product according to claim 8, wherein a dispersed phase of the polyglycolic acid residing in the morphology that the polyglycolic acid is dispersed as individually independent thin films, the ratio L/W of a major axis L to a minor axis W in each of which is at least 10 when an optional section in a thickness-wise direction of the oriented film is observed through a microscope, exists in a matrix of the polypropylene.

12. The formed product according to claim 11, wherein the ratio L/W is 10 to 500,000.

13. The formed product according to claim 8, wherein the dispersed phase of the polyglycolic acid resides in the morphology that the individually independent plural thin films of the polyglycolic acid are dispersed in a state stacked through a polypropylene layer along a thickness-wise direction of the oriented film.

14. The formed product according to claim 8, wherein the formed product is a biaxially oriented film, and the oxygen gas transmission coefficient thereof when standardized in a thickness of 10 µm is at most 1/2 compared with a biaxially oriented film of the polypropylene alone.

15. A production process of a formed product, comprising respective steps composed of
(1) a feeding step 1 of feeding a resin component composed of 55 to 99% by mass of polypropylene and 1 to 45% by mass of polyglycolic acid, and a reactive compatibilizing agent in a proportion of 0.3 to 30 parts by mass per 100 parts by mass of the resin component into an extruder;
(2) a sheet-forming step 2 of melting and kneading the respective components in the extruder, extruding the resultant melted and kneaded product into a sheet from a T-die arranged at the tip of the extruder, and cooling and solidifying the extrudate; and
(3) an orienting step 3 of heating the sheet to an orienting temperature and then uniaxially or biaxially orienting the sheet,
wherein an oriented film, in which a dispersed phase of the polyglycolic acid residing in the morphology that the polyglycolic acid is dispersed as individually independent thin films exists in a matrix of the polypropylene, is obtained through these steps.

16. The production process according to claim 15, wherein in the forming step 2, the respective components are melted and kneaded at a temperature of from the melting point of the polyglycolic acid or higher to 300°C or lower in the extruder.

17. The production process according to claim 15, wherein in the orienting step 3, the sheet is heated to an orienting temperature of 50 to 170°C.

18. The production process according to claim 15, wherein in the orienting step 2, the sheet is heated to the orienting temperature and then uniaxially or biaxially oriented at a draw ratio of from higher than one time to at most 20 times in a machine direction or a crosswise direction, or both directions.

19. The production process according to claim 15, wherein after the orienting step 3, a heat-setting step of heat-setting the oriented film for from 1 second to 3 hours at a temperature ranging from 60 to 170°C while maintaining its length constant, or under tension is further arranged.

20. The production process according to claim 15, wherein in the sheet-forming step 2, the respective components are melted and kneaded in a residence time ranging from 3 to 30 minutes in the extruder, and the melted and kneaded product is then extruded into a sheet from the T-die arranged at the tip of the extruder, and cooled and solidified.
